# EUROPÄISCHE PATENTSCHRIFT

(11) **EP 4 070 011 B1**
(45) Veröffentlichungstag und Bekanntmachung des Hinweises auf die Patenterteilung: **20.03.2024**
(21) Anmeldenummer: 20839342.1
(22) Anmeldetag: 28.12.2020
(51) Int. Cl.: F22B 1/00

(54) **ANLAGE MIT ZUSATZMODUL**
INSTALLATION COMPRISING AN AUXILIARY MODULE
INSTALLATION COMPRENANT UN MODULE AUXILIAIRE

(30) Priorität: 29.01.2020 DE 102020201029
(43) Veröffentlichungstag der Anmeldung: 12.10.2022
(73) Patentinhaber: Siemens Energy Global GmbH & Co. KG, 81739 München (DE)
(72) Erfinder: SÜRKEN, Norbert, 45478 Mülheim a.d. Ruhr (DE)
(86) Internationale Anmeldenummer: PCT/EP2020/087930
(87) Internationale Veröffentlichungsnummer: WO 2021/151605

(56) Entgegenhaltungen:
- DE-A1-102011 121 341
- DE-A1-102012 013 076
- DE-A1-102015 218 502
- US-A- 5 782 081
- US-A1- 2019 390 577

## Beschreibung

Die Erfindung betrifft eine Anlage umfassend eine Dampfturbine, einen Dampferzeuger, ferner einen Kondensator, wobei der Dampferzeuger strömungstechnisch mit einem Eingang der Dampfturbine verbunden und ein Ausgang der Dampfturbine mit dem Kondensator verbunden ist, wobei der Kondensator mit dem Dampferzeuger verbunden ist.

In herkömmlichen Dampfkraftanlagen wird Frischdampf in herkömmlicher Weise im Dampferzeuger erzeugt und einer Dampfturbine zugeführt, die in der Regel eine Hochdruck-Teilturbine, eine Mitteldruck-Teilturbine und eine Niederdruck-Teilturbine aufweist. Der Frischdampf strömt in die Hochdruck-Teilturbine und anschließend zu einem Dampferzeuger, wo der Dampf wieder erhitzt wird. Über eine so genannte heiße Zwischenüberhitzerleitung strömt der Dampf anschließend in eine Mitteldruck-Teilturbine. Nach der Mitteldruck-Teilturbine strömt der Dampf zu einer Niederdruck-Teilturbine und anschließend zu einem Kondensator, wo der Dampf wieder zu Wasser kondensiert. Anschließend strömt das Wasser zu dem Dampferzeuger. Somit wird ein Kreislauf geschlossen.

Dokument DE 10 2011 121341 A1 offenbart eine Dampfturbinenanlage mit Knallgasbooster aus dem Stand der Technik.

Eine Teilturbine, die mit einem Dampf aus einem Zwischenüberhitzer beströmt wird, wird als Mitteldruck-Teilturbine bezeichnet.

Eine Teilturbine, die mit Frischdampf aus dem Dampferzeuger beströmt wird, wird als Hochdruck-Teilturbine bezeichnet, wobei mit Frischdampf ein Dampf zu verstehen ist, der in der Anlage die höchsten Temperaturen und Drücke aufweist und einer Mitteldruck-Teilturbine strömungstechnisch vorgeschaltet ist.

Aufgabe der Erfindung ist es diesen Kreislauf zu verbessern.

Gelöst wird diese Aufgabe durch eine Anlage gemäß Anspruch 1. Die Erfindung geht von dem Aspekt aus, die Energie in dem im Wasser-Dampf-Kreislauf befindlichen Dampfes zu erhöhen. Dies wird erfindungsgemäß dadurch erreicht, indem ein Booster in der Anlage angeordnet wird. Der Booster ist derart ausgebildet, dass dieser Wasserstoff und Sauerstoff kontrolliert in einer Knallgas-Reaktion miteinander reagieren lässt, wodurch Wasser in Dampfform entsteht. Dieser Dampf wird anschließend in die Dampfturbine geleitet. Der Gesamtwirkungsgrad der Anlage erhöht sich dadurch.

Vorteilhafte Weiterbildungen sind in den Unteransprüchen angegeben.

In einer ersten vorteilhaften Weiterbildung wird die Temperatur des in die Dampfturbine strömenden Dampfes durch den Booster erhöht.

In einer weiteren vorteilhaften Weiterbildung wird der thermodynamische Zustand des in die Dampfturbine strömenden Dampfes erhöht.

Erfindungsgemäß wird der Booster vorgewärmt.

Es hat sich gezeigt, dass der Booster besser betrieben werden kann, wenn er vorgewärmt wird.

Erfindungsgemäß wird der Booster mit Dampf vorgewärmt.

Erfindungsgemäß wird der Booster mit Dampf aus der Anlage, insbesondere aus dem Dampferzeuger vorgewärmt.

In einer weiteren vorteilhaften Weiterbildung wird das im Kondensator kondensierte Wasser teilweise einem Elektrolyzer zugeführt, wobei der Elektrolyzer derart ausgebildet ist, dass dieser Wasser in Wasserstoff und Sauerstoff trennt. Vorteilhafterweise wird der im Elektrolyzer erzeugte Wassererstoff und Sauerstoff dem Booster zugeführt.

Erfindungsgemäß umfasst die Dampfturbine eine Hochdruck-Teilturbine, eine Mitteldruck-Teilturbine, wobei der Booster vor der Mitteldruck-Teilturbine angeordnet ist. In einer weiteren vorteilhaften Weiterbildung umfasst die Dampfturbine eine Niederdruck-Teilturbine.

Erfindungsgemäß wird der Booster mit dem Ausgang der Hochdruck-Teilturbine strömungstechnisch verbunden, wobei im Booster eine Mischung aus Dampf aus dem Zwischenüberhitzer und aus der Hochdruck-Teilturbine angeordnet ist.

Im Folgenden ist die Erfindung anhand verschiedener Figuren zum besseren Verständnis unter Darstellung bevorzugter Ausführungsbeispiele illustriert.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Gleiche Bauteile oder Bauteile mit gleicher Funktion sind dabei mit gleichen Bezugszeichen gekennzeichnet.

Ausführungsbeispiele der Erfindung werden nachfolgend anhand der Zeichnungen beschrieben. Diese soll die Ausführungsbeispiele nicht maßgeblich darstellen, vielmehr ist die Zeichnung, wo zur Erläuterung dienlich, in schematisierter und/oder leicht verzerrter Form ausgeführt. Im Hinblick auf die Ergänzungen der in den Zeichnungen unmittelbar erkennbaren Lehren wird auf den einschlägigen Stand der Technik verwiesen.

Es zeigen:
- Figur 1: eine schematische Darstellung der Anlage
- Figur 2: eine Darstellung eines T-S-Diagramms einer Anlage gemäß dem Stand der Technik
- Figur 3: eine Darstellung eines T-S-Diagramms einer erfindungsgemäßen Anlage

In den Figuren bedeuten gleiche Bezugszeichen funktionsgleiche Bauteile.

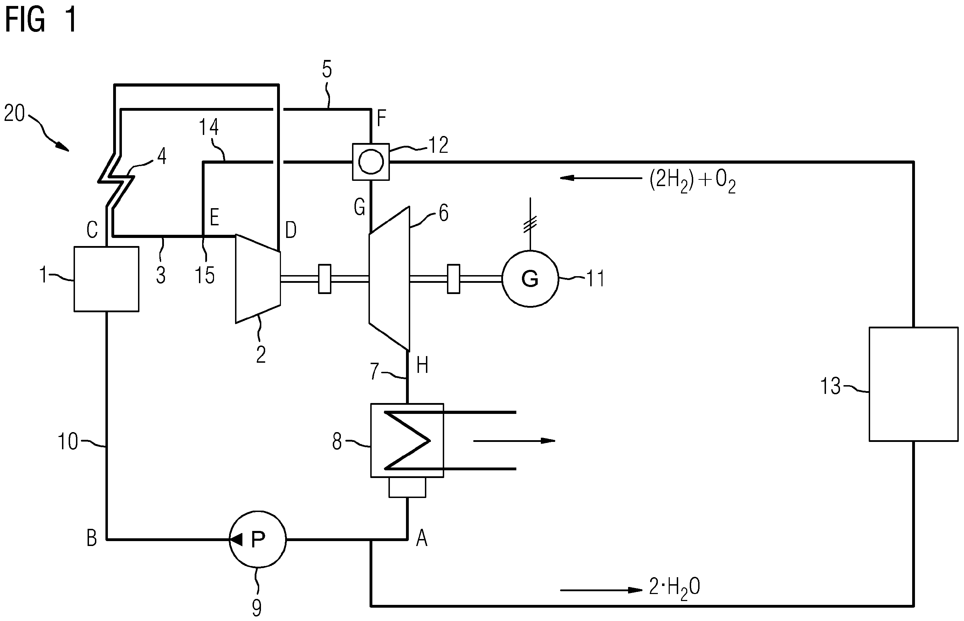

Figur 1 zeigt eine schematische Darstellung einer erfindungsgemäßen Anlage (20).

In einem Dampferzeuger (1) wird Wasser erhitzt. Dabei wird das Wasser erhitzt bis es dampfförmig ist. Der dadurch erzeugte Hochdruck-Frischdampf wird dann einer Hochdruck-Teilturbine (2) zugeführt. In der Hochdruck-Teilturbine (2) wird die Energie des Dampfes in mechanische Energie umgewandelt. Die Temperatur und der Druck des Dampfes sinken dabei. Nach der Hochdruck-Teilturbine (2) strömt der Dampf über eine kalte Zwischenüberhitzerleitung "kZÜ" (3) zu einem Zwischenüberhitzer (4). Dort wird die Temperatur des Dampfes wieder erhöht. Anschließend strömt der Dampf über eine heiße Zwischenüberhitzerleitung "hZÜ" (5) in eine Mitteldruck-Teilturbine (6). Nach der Mitteldruck-Teilturbine (6) strömt der Dampf zu einer Niederdruck-Teilturbine (nicht dargestellt). Die in Figur 1 dargestellte Mitteldruck-Teilturbine (6) kann auch eine kombinierte Mitteldruck- und Niederdruck-Teilturbine darstellen, bei der die Mitteldruck- und Niederdruck-Teilturbine ein gemeinsames Gehäuses aufweisen.

Nach der Niederdruck-Teilturbine strömt der Dampf über eine Leitung (7) in einen Kondensator (8), wo er wieder zu Wasser kondensiert. Das so entstandene Wasser wird über eine Pumpe (9) wieder über eine Leitung (10) zum Dampferzeuger (1) geführt.

Ein Generator (11) ist drehmomentübertragend mit der Dampfturbine verbunden, wobei unter Dampfturbine die Gesamtheit aus Hochdruck-Teilturbine, Mitteldruck-Teilturbine und Niederdruck-Teilturbine verstanden wird.

Erfindungsgemäß wird in der heißen Zwischenüberhitzerleitung "hZÜ" (5) ein Booster (12) angeordnet. Der Booster (12) ist derart ausgebildet, dass dieser Wasserstoff und Sauerstoff in einer Knallgasreaktion miteinander reagieren lassen kann. Nach der Reaktion entsteht Wasser in einer dampfförmigen Phase.

Diese zusätzliche Energie wird sozusagen in die Mitteldruck-Teilturbine (6) geführt. Wichtig ist hierbei, dass nicht zwingend der Massenstrom des Dampfes durch den Booster (12) erhöht wird, sondern vielmehr die Energie des Dampfes. Daher strömt ein Dampf aus dem Dampferzeuger (1) gemischt mit einem aus dem Booster (12) entstandenen Dampf in die Mitteldruck-Teilturbine (6).

Der Booster (12) wird vor der Inbetriebnahme vorgewärmt. Es hat sich gezeigt, dass eine stabile Reaktion dadurch entsteht, wenn der Booster (12) vorgewärmt wird.

Diese Vorwärmung erfolgt mit einer nicht dargestellten Einrichtung.

Die Vorwärmung kann in einer alternativen Ausführungsform mit Dampf erfolgen. Der Dampf wird hierbei aus der kalten Zwischenüberhitzerleitung "kZÜ" (3) oder aus der heißen Zwischenüberhitzerleitung "hZÜ" (5) entnommen.

Nach der Kondensation des Dampfes im Kondensator (8) wird ein Teil des Wassers einem Elektrolyzer (13) zugeführt. Der Elektrolyzer (13) ist derart ausgebildet, dass dieser das Wasser in Wasserstoff und Sauerstoff trennt. Dies erfolgt unter Hinzufügung von Energie.

Der im Elektrolyzer (13) erzeugte Wasserstoff und Sauerstoff wird dem Booster (12) zugeführt, was in der Figur 1 rechts oben symbolisch dargestellt ist. Dadurch wird ein Kreislauf geschlossen.

Zusätzlich zu dem Dampf aus der heißen Zwischenüberhitzerleitung "hZÜ" (5) wird ein Dampf aus der kalten Zwischenüberhitzerleitung "kZÜ" (3) entnommen und über eine Leitung (14) zum Booster (12) geführt. Diese Leitung (14) ist mit der kalten Zwischenüberhitzerleitung "kZÜ" (3) an einer Abzweigung (15) strömungstechnisch verbunden.

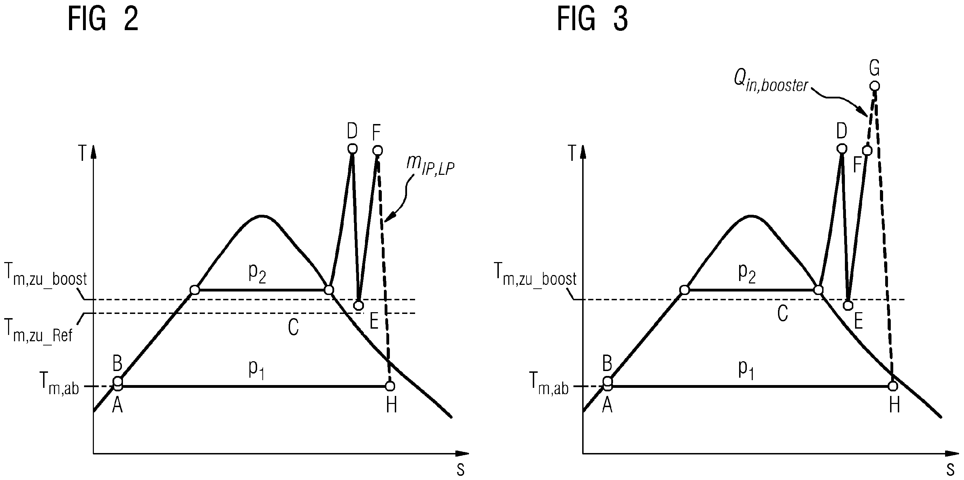

Die Figur 2 zeigt ein bekanntes T-S-Diagramm für einen Wasser-Dampf-Kreislauf in einem Dampfkraftwerk gemäß dem Stand der Technik. Die in der Figur 2 gezeigten Buchstaben entsprechen den in Figur 1 gezeigten Positionen, allerdings ohne einen Booster (12). Es gilt: A ... nach dem Kondensator (8), B ... nach der Pumpe (9), C ... nach dem Dampferzeuger (1), D ... Eingang der Hochdruck-Teilturbine (2), E ... Ausgang der Hochdruck-Teilturbine (2), F ... nach dem Zwischenüberhitzer (4) vor der Mitteldruck-Teilturbine (6), H ... nach der Mitteldruck-Teilturbine (6).

Die Figur 3 zeigt das T-S-Diagramm einer erfindungsgemäßen Anlage. Die in der Figur 3 gezeigten Buchstaben entsprechen den in Figur 1 gezeigten Positionen. Nun mit dem Booster (12). Es gilt: G ... nach dem Booster (12).

Ein wesentliches Merkmal der Figur 3 ist, dass der Dampfzustand des Dampfes sich durch den Booster ändert (von F nach G). Wie aus der Figur zu sehen ist, wird nicht der Massenstrom erhöht, sondern die Dampfparameter, wie die Temperatur werden erhöht, wie es durch den Anstieg von F nach G in der Figur 3 zu sehen ist.

## Patentansprüche

1. Anlage (20)
umfassend eine Dampfturbine (2, 6),
einen Dampferzeuger (1), ferner einen Kondensator (8), wobei der Dampferzeuger (1) strömungstechnisch mit einem Eingang der Dampfturbine (2, 6) verbunden und ein Ausgang der Dampfturbine (2, 6) mit dem Kondensator (8) verbunden ist, wobei der Kondensator (8) mit dem Dampferzeuger (1) verbunden ist,
wobei die Dampfturbine (2,6) eine Hochdruck-Teilturbine (2) und eine Mitteldruck-Teilturbine (6) umfasst,
wobei der Ausgang der Hochdruck-Teilturbine (2) über eine kalte Zwischenüberhitzerleitung "kZÜ" (3) mit einem Zwischenüberhitzer (4) strömungstechnisch verbunden ist, wobei der Eingang der Mitteldruck-Teilturbine (6) über eine heiße Zwischenüberhitzerleitung "hZÜ" (5) mit dem Zwischenüberhitzer (4) strömungstechnisch verbunden ist, weiter umfassend einen Booster (12), der in einer in die Dampfturbine (2, 6) führenden Dampfleitung (5) angeordnet ist und derart ausgebildet ist, dass eine Knallgasreaktion im Booster (12) stattfindet, wobei das nach der Knallgasreaktion entstandene Reaktionsprodukt in die Dampfturbine (2, 6) geführt wird,
wobei der Booster (12) eine Einrichtung zum Vorwärmen des Boosters (12) umfasst,
wobei die Vorwärmung durch Dampf erfolgt,
wobei der Dampf zur Vorwärmung aus der kalten Zwischenüberhitzerleitung "kZÜ" (3) oder aus der heißen Zwischenüberhitzerleitung "hZÜ" (5) entnommen wird,
wobei der Booster (12) mit dem Ausgang der Hochdruck-Teilturbine (2) strömungstechnisch verbunden ist, wobei im Booster (12) eine Mischung aus Dampf aus dem Zwischenüberhitzer (4) und Dampf aus der Hochdruck-Teilturbine (2) angeordnet ist.

2. Anlage (20) nach Anspruch 1,
wobei im Booster (12) die Temperatur des in die Dampfturbine (2, 6) strömenden Dampfes erhöht wird.

3. Anlage (20) nach Anspruch 1 oder 2,
wobei im Booster (12) der Zustand des in die Dampfturbine (2, 6) strömenden Dampfes erhöht wird.

4. Anlage (20) nach einem der vorhergehenden Ansprüche, wobei im Kondensator (8) Dampf zu Wasser kondensiert und das Wasser einem Elektrolyzer (13) zugeführt wird, wobei der Elektrolyzer (13) derart ausgebildet ist, dass das Wasser in Wasserstoff und Sauerstoff getrennt wird.

5. Anlage (20) nach Anspruch 4,
wobei der Wasserstoff und der Sauerstoff dem Booster (12) zugeführt wird.

## Claims

1. Installation (20)
comprising a steam turbine (2, 6),
a steam generator (1), and also a condenser (8), the steam generator (1) being connected in terms of flow to an inlet of the steam turbine (2, 6), and an outlet of the steam turbine (2, 6) being connected to the condenser (8), with the condenser (8) being connected to the steam generator (1),
the steam turbine (2, 6) comprising a high-pressure part-turbine (2) and a medium-pressure part-turbine (6),
the outlet of the high-pressure part-turbine (2) being connected in terms of flow to a reheater (4) by way of a cold reheater line "kZÜ" (3),
the inlet of the medium-pressure part-turbine (6) being connected in terms of flow to the reheater (4) by way of a hot reheater line "hZÜ" (5),
also comprising a booster (12), which is arranged in a steam line (5) that leads into the steam turbine (2, 6) and is designed in such a way that an oxyhydrogen reaction takes place in the booster (12), with the reaction product that is produced after the oxyhydrogen reaction being passed into the steam turbine (2, 6),
the booster (12) comprising a device for preheating the booster (12),
the preheating being performed by steam,
the steam for the preheating being taken from the cold reheater line "kZÜ" (3) or from the hot reheater line "hZÜ" (5),
the booster (12) being connected in terms of flow to the outlet of the high-pressure part-turbine (2), with a mixture of steam from the reheater (4) and steam from the high-pressure part-turbine (2) being arranged in the booster (12).

2. Installation (20) according to Claim 1,
the temperature of the steam that flows into the steam turbine (2, 6) being increased in the booster (12).

3. Installation (20) according to Claim 1 or 2,
the state of the steam that flows into the steam turbine (2, 6) being increased in the booster (12).

4. Installation (20) according to one of the preceding claims, steam being condensed into water in the condenser (8) and the water being fed to an electrolyser (13), with the electrolyser (13) being designed in such a way that the water is separated into hydrogen and oxygen.

5. Installation (20) according to Claim 4,
the hydrogen and the oxygen being fed to the booster (12).

## Revendications

1. Installation (20)
comprenant une turbine (2, 6) à vapeur,
un générateur (1) de vapeur, en outre un condenseur (8), dans laquelle le générateur (1) de vapeur communique en technique d'écoulement avec une entrée de la turbine (2, 6) à vapeur et une sortie de la turbine (2, 6) à vapeur communique avec le condenseur (8), dans laquelle le condenseur (8) communique avec le générateur (1) de vapeur,
dans laquelle la turbine (2, 6) à vapeur comprend une turbine (2) partielle de haute pression et une turbine (6) partielle de moyenne pression,
dans laquelle la sortie de la turbine (2) partielle de haute pression communique en technique d'écoulement avec un surchauffeur (4) intermédiaire par un conduit "kZÜ" (3) de surchauffeur intermédiaire froid,
dans laquelle l'entrée de la turbine (6) partielle de moyenne pression communique en technique d'écoulement avec le surchauffeur (4) intermédiaire par un conduit "hZÜ" (5) de surchauffeur chaud,
comprenant en outre un booster (12), qui est monté dans un conduit (5) pour de la vapeur menant à la turbine (2, 6) à vapeur et qui est constitué de manière à ce qu'une réaction de gaz détonant ait lieu dans le booster (12), dans laquelle on envoie à la turbine (2, 6) à vapeur le produit de réaction créé après la réaction de gaz détonant,
dans laquelle le booster (12), comprend un dispositif de préchauffage du booster (12),
dans laquelle le préchauffage s'effectue par de la vapeur,
dans laquelle on prélève la vapeur pour le préchauffage du conduit "kZÜ" (3) de surchauffeur intermédiaire froid ou du conduit "hZÜ" (5) de surchauffeur intermédiaire chaud,
dans laquelle le booster (12) communique en technique d'écoulement avec la sortie de la turbine (2) partielle de haute pression, dans laquelle il est disposé dans le booster (12) un mélange de vapeur provenant du surchauffeur (4) intermédiaire et de vapeur provenant de la turbine (2) partielle de haute pression.

2. Installation (20) suivant la revendication 1,
dans laquelle on élève dans le booster (12) la température de la vapeur passant dans la turbine (2, 6) à vapeur.

3. Installation (20) suivant la revendication 1 ou 2,
dans laquelle on élève dans le booster (12) l'état de la vapeur passant dans la turbine (2, 6) à vapeur.

4. Installation (20) suivant l'une des revendications précédentes,
dans laquelle on condense dans le condenseur (8) de la vapeur en eau et on envoie l'eau à un électrolyseur (13), dans laquelle l'électrolyseur (13) est constitué de manière à décomposer l'eau en de l'hydrogène et en de l'oxygène.

5. Installation (20) suivant la revendication 4,
dans laquelle on envoie l'hydrogène et l'oxygène au booster (12) .
